# EUROPEAN PATENT APPLICATION

(11) **EP 4 560 227 A1**
(43) Date of publication of application: **28.05.2025**
(21) Application number: 23872736.6
(22) Date of filing: 14.07.2023
(51) Int. Cl.: F25C 1/22, F25B 39/02, B23P 15/26

(54) **EVAPORATOR FOR ICE MAKING, AND METHOD FOR MANUFACTURING EVAPORATOR FOR ICE MAKING**

(30) Priority: 27.09.2022 KR 20220122153
(71) Applicant: Coway Co., Ltd., Gongju-si, Chungcheongnam-do 32508 (KR)
(72) Inventor: KIM, Jae Man, Gongju-si, Chungcheongnam-do 32508 (KR)
(74) Representative: Vossius & Partner Patentanwälte Rechtsanwälte mbB
(86) International application number: PCT/KR2023/010132
(87) International publication number: WO 2024/071611

(57) **Abstract**

Provided is an ice-making evaporator. An ice-making evaporator according to one aspect of the present invention may comprise: an evaporator main body having a main body space therein extending in the front and rear direction so that a refrigerant can flow; a main body space-dividing wall extending in the same direction as the main body space to divide the main body space into a first main body space and a second main body space; an ice-making member having a heat exchange space therein capable of fluid communication of the main body space, and an ice-making groove formed on the outer portion thereof; a heat exchange space-dividing wall disposed in the heat exchange space such that the heat exchange space is divided into a first heat exchange space in fluid communication with the first main body space and a second heat exchange space in fluid communication with the second main body space; a coupling member interposed between the main body space-dividing wall and the heat exchange space-dividing wall to couple the main body space-dividing wall and the heat exchange space-dividing wall; a refrigerant inflow passage connected to the first main body space to introduce a refrigerant into the first main body space; and an outlet passage connected to the second main body space to discharge a refrigerant flowing in the second main body space to the outside.

## Description

### TECHNICAL FIELD

The present invention relates to an ice-making evaporator and a method for manufacturing an ice-making evaporator, and more particularly, to an ice-making evaporator that can manufacture semi-spherical or polyhedral ice and a method for manufacturing an ice-making evaporator.

### BACKGROUND ART

In general, an ice maker is an apparatus that cools water below the freezing point of 0°C to make ice and supplies it to users. Such an ice maker may be applied to a refrigerator or an ice water purifier that requires ice. In general, such an ice maker includes an ice-making evaporator including an evaporation tube through which refrigerant flows and an ice-making member cooled by the refrigerant.

The ice maker includes an immersion type ice maker that allows the ice-making member to be submerged in water to create ice in the ice-making member, a spray type ice maker that sprays water to the ice-making member to create ice in the ice-making mold, or a flow type ice maker that allows water to flow through the outer circumferential surface of the ice-making member to create ice in the ice-making member.

Korean Patent Laid-Open Publication No. 2013-0110874 of COWAY Co., Ltd. discloses a conventional ice maker. Such an ice maker is configured to produce ice by cooling an evaporator through which refrigerant flows by bringing it into contact with the upper portion of a hemispherical ice-making mold.

However, in this ice maker, since a refrigerant pipe is interposed between the refrigerant and the ice-making mold, the refrigerant cannot directly contact the ice-making mold, and as a result, the refrigerant cannot efficiently absorb thermal energy from the ice-making mold and the water inside it.

In addition, this ice maker does not provide a means for external air to flow into the upper portion of the ice-making mold, so effective atmospheric pressure acts inward on the ice-making mold, hindering the smooth release of the produced ice.

A conventional ice-making evaporator is disclosed in COWAY Co., Ltd.'s U.S. Patent Publication No. 2020-0020309. Such an ice-making evaporator is configured so that the refrigerant flows through the inner space of the evaporator main body and the immersion member to produce ice, and the heating member disposed in the inner space heats the refrigerant to release the ice.

However, since the ice-making evaporator does not have a structure in which the refrigerant circulates the inner space of the immersion member, it is difficult to fully demonstrate the refrigerant's cooling capacity due to the lack of long contact time between the refrigerant and the immersion member, and because the cooling capacity of the refrigerant cannot be evenly distributed to multiple immersion members, ice with different quality is manufactured at different speeds.

Furthermore, such an ice-making evaporator has many types of components, such as a separate heating member installed inside the evaporator main body, and the shape of the components and the arrangement and coupling structure between the components are complicated, which complicates the manufacturing process and increases the manufacturing cost.

A conventional ice-making evaporator is disclosed in COWAY Co., Ltd.'s Korean Patent Laid-Open Publication No. 2021-0003525. Such an ice-making evaporator is configured so that the internal spaces of the evaporation tube and the immersion member is partitioned by the partition member, and the refrigerant circulates through the partitioned internal space to produce ice, and the separately provided heating member heats the refrigerant to release the ice.

However, since such an ice-making evaporator is not structured to confirm whether the internal spaces of the evaporation tube and the immersion member partitioned by the partition member are fluidly isolated from each other, there is a problem that the refrigerant introduced into the evaporation tube may directly flow out of the evaporator without circulating the immersion member, so that it is not possible to prevent the manufacture of defective products with poor ice-making performance.
(Patent Document 1) Korean Patent Laid-Open Publication No. 2013-0110874
(Patent Document 2) US Patent Publication No. 2022-0034571
(Patent Document 3) Korean Patent Laid-Open Publication No. 2021-0003525

### DISCLOSURE

### TECHNICAL PROBLEM

The present invention has been devised in view of the above problems, and the present invention is directed to providing an ice-making evaporator in which the internal space of the ice-making evaporator is divided into a plurality of spaces, and a refrigerant circulates through the partitioned plurality of spaces to make ice, thereby sufficiently exhibiting the cooling capacity of the refrigerant.

The present invention is also directed to providing an ice-making evaporator in which the internal space of the ice-making evaporator is divided into a plurality of spaces, and a refrigerant sequentially passes through the partitioned plurality of spaces to make ice, thereby capable of evenly distributing the cooling capacity of the refrigerant and manufacturing a plurality of ice having uniform quality at the same speed.

The present invention is also directed to providing an ice-making evaporator that can check whether the partitioned internal spaces of the evaporator main body and the ice-making member are fluidly isolated from each other, so can prevent the manufacture of defective products with poor ice-making performance.

The present invention is also directed to providing an ice-making evaporator with increased manufacturing convenience and reduced manufacturing cost by providing components for partitioning the internal space of the ice-making evaporator as separate members and assembling them.

The present invention is also directed to providing an ice-making evaporator in which as the components for partitioning the internal space of the ice-making evaporator are inserted into an open opening in the evaporator main body, they can be installed in the internal space of the evaporator main body, thereby increasing assemblability and manufacturing convenience and reducing manufacturing cost.

The present invention is also directed to providing an ice-making evaporator that does not include a separate heating member, so that the shape of the components and the coupling structure between the components are simple, thereby increasing manufacturing convenience and reducing manufacturing cost.

The present invention is also directed to providing an ice-making evaporator capable of smoothly performing the ice release process by introducing external air into the ice-making groove in which ice is manufactured.

The present invention is also directed to providing an ice-making evaporator in which a refrigerant is guided so that the refrigerant flows into the partitioned inner spaces of the ice-making evaporator, thereby increasing the time and area in which the refrigerant comes into contact, and fully exhibiting the cooling capacity of the refrigerant.

The present invention is also directed to providing an ice-making evaporator in which a refrigerant is guided to pass through the end of the partitioned internal space of the ice-making evaporator, so that the time and area in which the refrigerant comes into contact can be increased, so that the cooling capacity of the refrigerant can be fully exhibited.

The present invention is also directed to providing an ice-making evaporator in which a refrigerant is forced to flow in contact with the circumference of the ice-making part in which ice is made, thereby increasing the time and area in which the refrigerant comes into contact, thereby fully exhibiting the cooling capacity of the refrigerant.

The present invention is also directed to providing an ice-making evaporator with increased space efficiency by allowing a cold refrigerant to directly contact the ice-making part for making ice, so that the cooling capacity of the refrigerant can be fully exhibited, and the space occupied by the evaporator can be minimized.

The present invention is also directed to providing a method for manufacturing an ice-making evaporator that can check whether the partitioned internal spaces of the evaporator main body and the ice-making member are fluidly isolated from each other, so can prevent the manufacture of defective products with poor ice-making performance.

The present invention is also directed to providing a method for manufacturing an ice-making evaporator that can simplify the manufacturing process and reduce manufacturing costs by simplifying the shape of the provided components and the coupling structure between the components, and by configuring the manufacturing process to assemble the components sequentially.

The problems of the present invention are not limited to those mentioned above, and other problems not mentioned will be clearly understood by those of ordinary skill in the art from the following description.

### TECHNICAL SOLUTION

According to an aspect of the present invention, provided is an ice-making evaporator, including: an evaporator main body having a main body space therein extending in the front-rear direction to allow refrigerant to flow; a main body space-dividing wall extending in the same direction as the main body space to divide the main body space into a first main body space and a second main body space; an ice-making member having a heat exchange space therein in fluid communication with the main body space, and an ice-making groove formed on the outer portion thereof; a heat exchange space-dividing wall disposed in the heat exchange space such that the heat exchange space is divided into a first heat exchange space in fluid communication with the first main body space and a second heat exchange space in fluid communication with the second main body space; a coupling member interposed between the main body space-dividing wall and the heat exchange space-dividing wall to couple the main body space-dividing wall and the heat exchange space-dividing wall; a refrigerant inflow passage connected to the first main body space to introduce a refrigerant into the first main body space; and an outlet passage connected to the second main body space to discharge a refrigerant flowing in the second main body space to the outside.

In this case, the coupling member may include a main body-side coupling part coupled to a side in the extension direction of the main body space-dividing wall and an ice-making member-side coupling part coupled to the heat exchange space-dividing wall.

In this case, a first coupling member groove may be formed on the side in the extension direction of the main body space-dividing wall, and a main body space-dividing wall coupling groove correspondingly coupled to the first coupling member groove may be formed at the main body-side coupling part of the coupling member.

In this case, a second coupling member groove may be formed at an edge of the heat exchange space-dividing wall with the edge facing the evaporator main body, and a heat exchange space-dividing wall coupling groove correspondingly coupled to the second coupling member groove may be formed at the ice-making member-side coupling part of the coupling member.

According to another aspect of the present invention, provided is an ice-making evaporator, including an evaporator main body having a main body space therein extending in the front-rear direction to allow refrigerant to flow; a main body space-dividing wall extending in the same direction as the main body space to divide the main body space into a first main body space and a second main body space; an ice-making member including a body part having an upper portion coupled to the evaporator main body and having a heat exchange space therein in fluid communication with the main body space, and an ice-making member provided below the body part and having an ice-making groove formed at a lower portion of the ice-making member; a heat exchange space-dividing wall disposed in the heat exchange space such that the heat exchange space is divided into a first heat exchange space in fluid communication with the first main body space and a second heat exchange space in fluid communication with the second main body space; a coupling member interposed between the main body space-dividing wall and the heat exchange space-dividing wall to couple the main body space-dividing wall and the heat exchange space-dividing wall; a refrigerant inflow passage connected to the first main body space to introduce a refrigerant into the first main body space; and an outlet passage connected to the second main body space to discharge a refrigerant flowing in the second main body space to the outside, wherein the ice-making part includes a first portion located in the main body space and a second portion formed around the first portion to cross the interior of the body part.

In this case, the ice-making part may have a convex surface protruding convexly toward the evaporator main body and a concave surface facing the convex surface, and the ice-making groove may be formed on the concave surface.

In this case, a seating groove in contact with at least a portion of the first portion may be formed on a side in the extension direction of the main body space-dividing wall.

In this case, the heat exchange space-dividing wall may include a front space-dividing wall and a rear space-dividing wall respectively disposed in front and rear of the second portion when viewed in the extension direction of the evaporator main body.

In this case, the ice-making evaporator may further include a guide wall coupled to the main body space-dividing wall, and the guide wall may include a first main body space-side guide part disposed in the first main body space to guide a refrigerant flowing from one end to the other end of the first main body space to pass through the first heat exchange space.

In this case, the guide wall may include a second main body space-side guide part disposed in the second main body space to guide a refrigerant flowing from one end to the other end of the second main body space to pass through the second heat exchange space.

In this case, the guide wall may include first heat exchange space-side guide part extending from the first main body space-side guide part to the first heat exchange space to divide the first heat exchange space into a first passing space and a second passing space.

In this case, a flow groove may be formed at an end portion in the extension direction of the first heat exchange space-side guide part, at a position adjacent to the ice-making groove, and the first passing space and the second passing space may be formed to be connected in fluid communication between the inner wall of the ice-making member wherein the inner wall defines the heat exchange space, and the flow groove.

In this case, the ice-making evaporator may further include an air pipe connecting an ice-making member-side opening formed on the inner wall of the ice-making groove and a main body-side opening formed on the outer side of the evaporator main body.

In this case, the main body space-dividing wall and the heat exchange space-dividing wall may be disposed side by side on the same plane.

In this case, a circling space for allowing the refrigerant to flow from the first main body space to the second main body space may be provided in the evaporator main body, and a partition member may be disposed between the main body space and the circling space to divide the main body space and the circling space and comprises a first hole connecting the first main body space and the circling space so that the first main body space and the circling space are in fluid communication, and a second hole connecting the second main body space and the circling space so that the second main body space and the circling space are in fluid communication.

In this case, the ice-making groove may have a semi-spherical shape or polyhedral shape.

In this case, the ice-making member may be provided in plural, and the plurality of ice-making members may be arranged along the extension direction of the main body space.

In this case, the cross-section perpendicular to the extension direction of the evaporator main body may have a semi-spherical shape or a semi-elliptical shape.

According to yet another aspect of the present invention, provided is a method for manufacturing an ice-making evaporator, the method including providing an evaporator main body having a main body space therein that extends in the front-rear direction and has both ends open; assembling a main body space-dividing wall to the evaporator main body so that the main body space is divided into a first main body space and a second main body space; providing an ice-making member having a heat exchange space therein and an ice-making groove on the outer side; assembling a heat exchange space-dividing wall that divides the heat exchange space into a first heat exchange space and a second heat exchange space to either the evaporator main body or the main body space-dividing wall; assembling the ice-making member to the evaporator main body; and closing an open end of the main body space.

In this case, in the dividing the main body space, the main body space-dividing wall may be inserted into the evaporator main body through any one of both open ends of the main body space.

In this case, a coupling hole may be provided at a side in the extension direction of the evaporator main body, and the assembling the heat exchange space-dividing wall may include assembling a coupling member to the main body space-dividing wall through the coupling hole of the evaporator main body; and assembling the heat exchange space-dividing wall to the coupling member assembled to the main body space-dividing wall through the coupling hole of the evaporator main body.

In this case, the method may further include inspecting whether a first inspection target space consisting of the first main body space and the first heat exchange space capable of fluid communication with each other and a second inspection target space consisting of the second main body space and the second heat exchange space capable of fluid communication with each other are fluidly isolated from each other.

In this case, the inspecting whether it is isolated may include closing any one of both open ends of the evaporator main body; placing a partition member having a first hole fluidly connected to the first inspection target space and a second hole fluidly connected to the second inspection target space, at any one of both ends of the main body space; closing the first hole and the second hole; injecting a predetermined fluid into any one of the first inspection target space and the second inspection target space; and checking whether the injected fluid leaks into the other one of the first inspection target space and the second inspection target space.

### ADVANTAGEOUS EFFECT

The ice-making evaporator according to an exemplary embodiment of the present invention is configured such that the main body space-dividing wall and the heat exchange space-dividing wall divide the internal spaces of the evaporator main body and the ice-making member into a plurality of spaces so that refrigerant is circulated in the partitioned plurality of spaces to cool the ice-making member, thereby increasing the contact time between the refrigerant and the ice-making member, and sufficiently exhibiting the cooling capacity of the refrigerant.

In addition, the ice-making evaporator according to an exemplary embodiment of the present invention is configured such that the main body space-dividing wall and the heat exchange space-dividing wall divide the internal space of the plurality of ice-making members into a plurality of spaces so that refrigerant can sequentially pass through the partitioned plurality of internal spaces of the ice-making member to cool the plurality of ice-making members, whereby the cooling capacity of the refrigerant can be evenly distributed to the plurality of ice-making members and ice of uniform quality can be manufactured at the same speed for each of the plurality of ice-making members.

The ice-making evaporator according to an exemplary embodiment of the present invention is configured such that the second partition member can be used to check whether the internal spaces of the evaporator main body and the ice-making member are fluidly isolated from each other by the main body space-dividing wall and the heat exchange space-dividing wall, thereby preventing the manufacture of defective products with poor ice-making performance.

In the ice-making evaporator according to an exemplary embodiment of the present invention, the main body space-dividing wall to divide the internal space of the evaporator main body and the heat exchange space-dividing wall to divide the internal space of the ice-making member can be assembled after being provided as separate members, thereby increasing manufacturing convenience and reducing manufacturing cost.

In addition, in the ice-making evaporator according to an exemplary embodiment of the present invention, as the main body space-dividing wall is inserted into an open opening of the evaporator main body, it can be installed in the inner space of the evaporator main body, thereby increasing assemblability and manufacturing convenience, and reducing manufacturing costs by manufacturing each component in a simple process.

In addition, the ice-making evaporator according to an exemplary embodiment of the present invention does not include a separate heating member, and the shape of components and the coupling structure between the components are simple, thereby increasing manufacturing convenience and reducing manufacturing cost.

In addition, the ice-making evaporator according to an exemplary embodiment of the present invention includes an air pipe that allows outside air to flow into the ice-making groove where ice is made, so the ice release process can be performed smoothly.

In addition, the ice-making evaporator according to an exemplary embodiment of the present invention prevents the air pipe from being blocked by ice or water because the air pipe is arranged in the up-down direction, so even if the refrigerant cools the ice-making mold on the upper side of the ice-making mold, the ice release process can be performed smoothly.

In addition, in the ice-making evaporator according to an exemplary embodiment of the present invention, the guide wall can guide the refrigerant flowing through the main body space to the heat exchange space and at the same time guide the refrigerant flowing through the heat exchange space to flow in the up-down direction, thereby increasing the time and area in which the ice-making member and the refrigerant come into contact, and thus the cooling capacity of the refrigerant can be sufficiently exhibited, and thus ice can be efficiently manufactured.

In addition, in the ice-making evaporator according to an exemplary embodiment of the present invention, since the flow groove connecting the first passing space and the second passing space to fluidly communicate is located at the lower end of the heat exchange space and forcibly passes through the lower end of the heat exchange space when the refrigerant flows from the first passing space to the second passing space, the time and area in contact between the ice-making part and the refrigerant can be increased, and thus the cooling capacity of the refrigerant can be sufficiently exhibited.

In addition, the ice-making evaporator according to an exemplary embodiment of the present invention is configured such that the flow groove for fluidly connecting the first passing space and the second passing space is positioned adjacent to the ice-making part of the ice-making member so that the refrigerant forcibly contacts and flows around the ice-making part, thereby increasing the contact area and contact time between the refrigerant and the ice-making part, and sufficiently exhibiting the cooling capacity of the refrigerant.

In addition, the ice-making evaporator according to an exemplary embodiment of the present invention is configured such that a part of the ice-making part of the ice-making member, that is, the first portion, is placed in the main body space of the evaporator main body, allowing the ice-making part to come into direct contact with the cold refrigerant flowing inside the evaporator, which can fully exhibit the refrigerant's cooling capacity and also minimize the space occupied by the ice-making member, thereby increasing space efficiency.

In addition, the method for manufacturing an ice-making evaporator according to an exemplary embodiment of the present invention is configured to check whether the internal spaces of the ice-making evaporator are partitioned from each other using the second partition member, thereby preventing the manufacture of defective products with poor ice-making performance.

In addition, the method for manufacturing an ice-making evaporator according to an exemplary embodiment of the present invention simplifies the manufacturing process and reduces manufacturing costs because the shape of the provided components and the coupling structure between the components are simple and configured to assemble the components sequentially.

Advantageous effects of embodiments of the present invention are not limited to the above-described effects, and other effects not mentioned will be clearly understood by those of ordinary skill in the art from the present specification and the accompanying drawings.

### BRIEF DESCRIPTION OF THE DRAWINGS

FIGS. 1 and 2 are perspective views of an ice-making evaporator viewed from the upper side according to an exemplary embodiment of the present invention.
FIG. 3 is a perspective view of an ice-making evaporator viewed from the lower side according to an exemplary embodiment of the present invention.
FIG. 4 is a cut perspective view showing the inside of a part of a main body part of an evaporator main body of an ice-making evaporator according to an exemplary embodiment of the present invention.
FIG. 5 is a cut perspective view showing the inside of a part of an ice-making member of an ice-making evaporator according to an exemplary embodiment of the present invention.
FIG. 6 is an exploded perspective view of an ice-making evaporator according to an exemplary embodiment of the present invention.
FIG. 7 is a perspective view of an ice-making evaporator viewed from the upper side according to an exemplary embodiment of the present invention. In this case, the main body part of the evaporator main body and the ice-making member are shown in a dotted line and the components seen therethrough are shown in a solid line.
FIG. 8 is an exploded perspective view of a closing cap, a separation member, a partition member, a main body space-dividing wall, a guide wall, a coupling member, and a heat exchange space-dividing wall of an ice-making evaporator according to an exemplary embodiment of the present invention.
FIG. 9 is a cross-sectional view taken along the line I - I ' in FIG. 1.
FIG. 10 is a cross-sectional view taken along the line II-II' in FIG. 1.
FIG. 11 a transverse cross-sectional view of the ice-making evaporator shown in FIG. 1.
FIG. 12 is a view for describing a process of checking whether spaces partitioned using a second partition member inside an evaporator main body and inside an ice-making member are fluidly isolated in an ice-making evaporator according to an exemplary embodiment of the present invention.
FIG. 13 is a flowchart of a method for manufacturing an ice-making evaporator according to an exemplary embodiment of the present invention.
FIG. 14 is a detailed flowchart of a step of assembling a heat exchange space-dividing wall in a method for manufacturing an ice-making evaporator according to an exemplary embodiment of the present invention.
FIG. 15 is a detailed flowchart of a step of inspecting whether partitioned internal spaces of an evaporator main body and an ice-making member are isolated in a method for manufacturing an ice-making evaporator according to an exemplary embodiment of the present invention.

### MODES OF THE INVENTION

Terms and words used in the present specification and claims should not be construed as limited to their usual or dictionary definition. They should be interpreted as meaning and concepts consistent with the technical idea of the present invention, based on the principle that inventors may appropriately define the terms and concepts to describe their own invention in the best way.

It should be understood that the terms "comprise or include" or "have" or the like when used in this specification, are intended to describe the presence of stated features, numbers, steps, operations, elements, components and/or a combination thereof but not preclude the possibility of the presence or addition of one or more other features, numbers, steps, operations, elements, components, or a combination thereof.

The presence of an element in/on "front" , "rear" , "upper or above or top" or "lower or below or bottom" of another element includes not only being disposed in/on "front" , "rear" , "upper or above or top" or "lower or below or bottom" directly in contact with other elements, but also cases in which another element being disposed in the middle, unless otherwise specified. In addition, unless otherwise specified, that an element is "connected" to another element includes not only direct connection to each other but also indirect connection to each other.

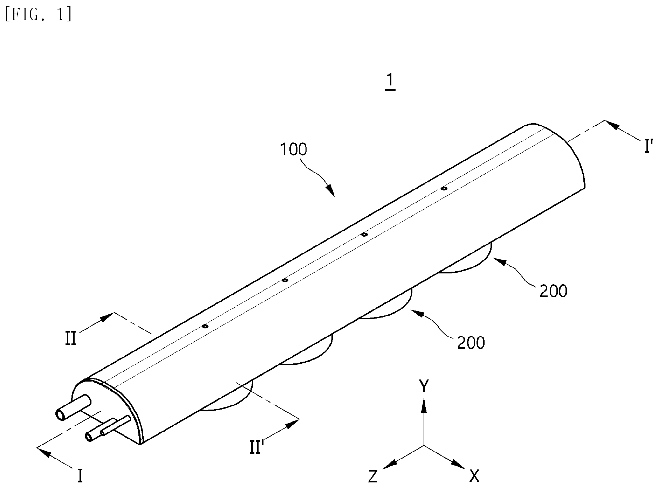

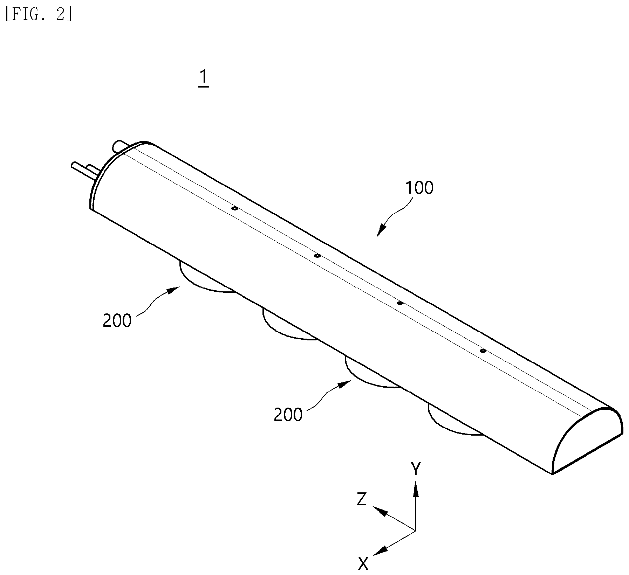

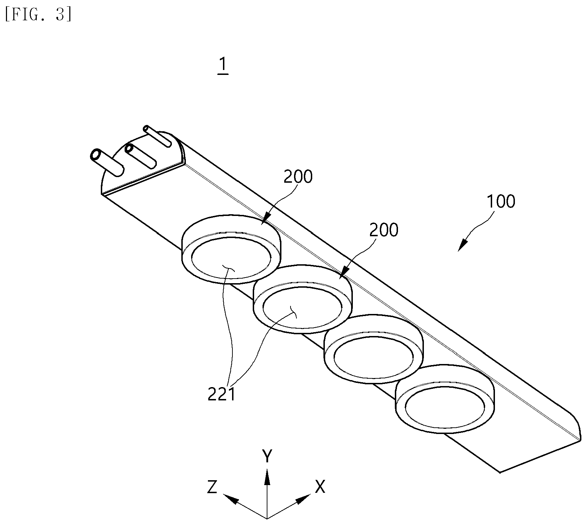

FIGS. 1 and 2 are perspective views of an ice-making evaporator viewed from the upper side according to an exemplary embodiment of the present invention. FIG. 3 is a perspective view of an ice-making evaporator viewed from the lower side according to an exemplary embodiment of the present invention.

Hereinafter, in describing drawings, it will be described based on the coordinate axis shown in FIG. 1. The positive direction of the X-axis is defined as the right direction, the negative direction of the X-axis is defined as the left direction, the positive direction of the Y-axis is defined as the upward direction, the negative direction of the Y-axis is defined as the downward direction, the positive direction of the Z-axis is defined as the front, and the negative direction of the Z-axis is defined as the rear.

Referring to FIGS. 1 to 3, an ice-making evaporator 1 according to an exemplary embodiment of the present invention is an ice-making evaporator for manufacturing semi-spherical ice, and may include an evaporator main body 100 and a plurality of ice-making members 200.

The evaporator main body 100 is a component for providing a space in which a cold refrigerant circulates, and may extend in one direction, for example, in the front-rear direction as shown.

A plurality of ice-making members 200 may be arranged in a line on a side portion in the extension direction of the evaporator main body 100. The ice-making member 200 provides a mold for forming ice having a predetermined shape. To this end, an ice-making groove 221 having a semi-spherical shape is formed on the lower portion of the ice-making member 200 according to the present embodiment, as shown in FIG. 3.

The refrigerant flowing through the evaporator main body 100 may circulate inside the plurality of ice-making members 200 to cool the ice-making members 200. In this case, a spray device (not shown) for spraying water into the ice-making groove 221 of the ice-making member 200 may be provided on one side of the ice-making evaporator 1.

Accordingly, water sprayed from the spray device comes into contact with the inner wall of the ice-making groove 221 of the ice-making member 200, and ice having a shape corresponding to the shape of the ice-making groove 221 may be formed inside the ice-making groove 221 as the water is cooled.

In the illustrated embodiment, since the ice-making groove 221 has a semi-spherical shape, the ice-making evaporator 1 may produce semi-spherical ice. However, the shape of the ice-making groove 221 may be variously modified according to the shape of the ice to be produced.

For example, in order to manufacture polyhedral ice, the shape of the ice-making groove 221 may have a polyhedral shape corresponding thereto. In addition, one of the plurality of ice-making grooves 221 may have a different shape from another, so that ice of different shapes may be simultaneously manufactured.

Furthermore, in another embodiment, the ice-making evaporator 1 may further include a separate lower mold (not shown) having a semi-spherical ice-making groove that may face to correspond to the ice-making groove 221 of the ice-making member 200, so that the ice-making member 200 and the lower mold may be configured to manufacture spherical ice.

Hereinafter, detailed components of the ice-making evaporator according to an exemplary embodiment of the present invention will be described.

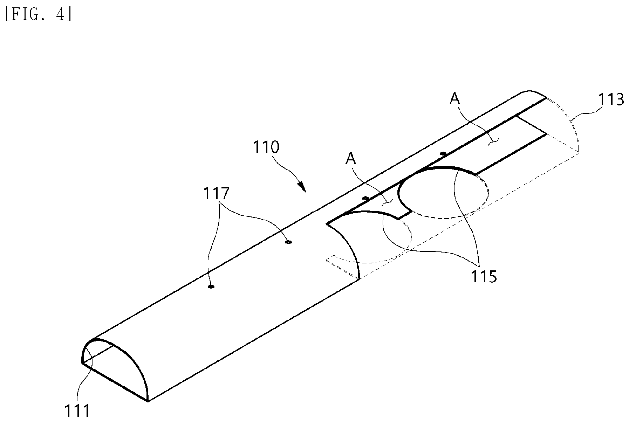

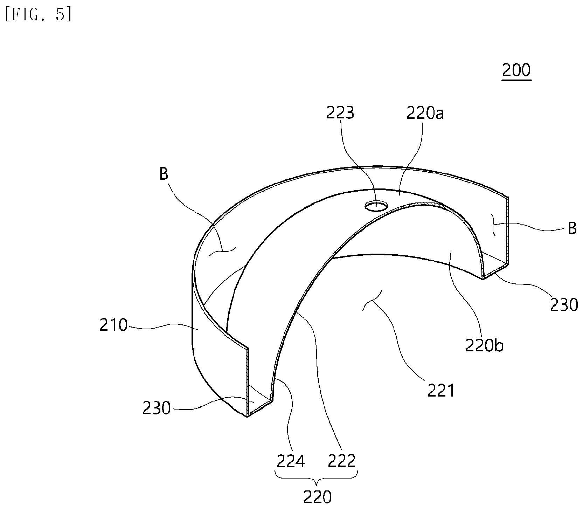

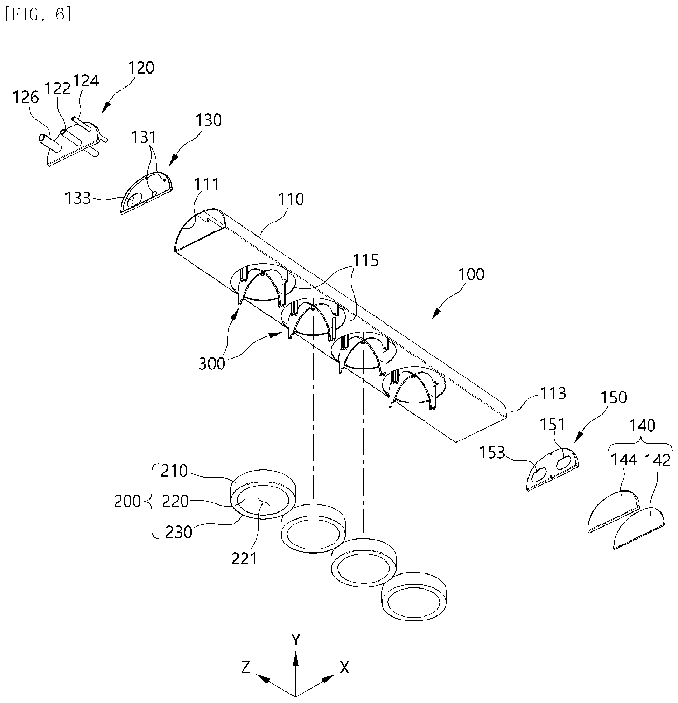

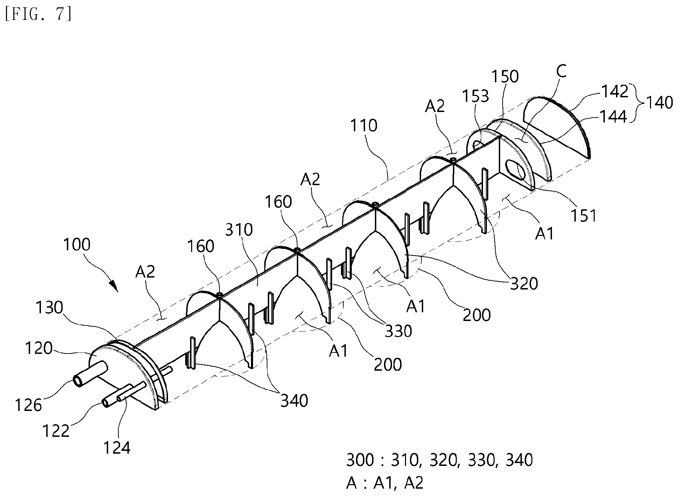

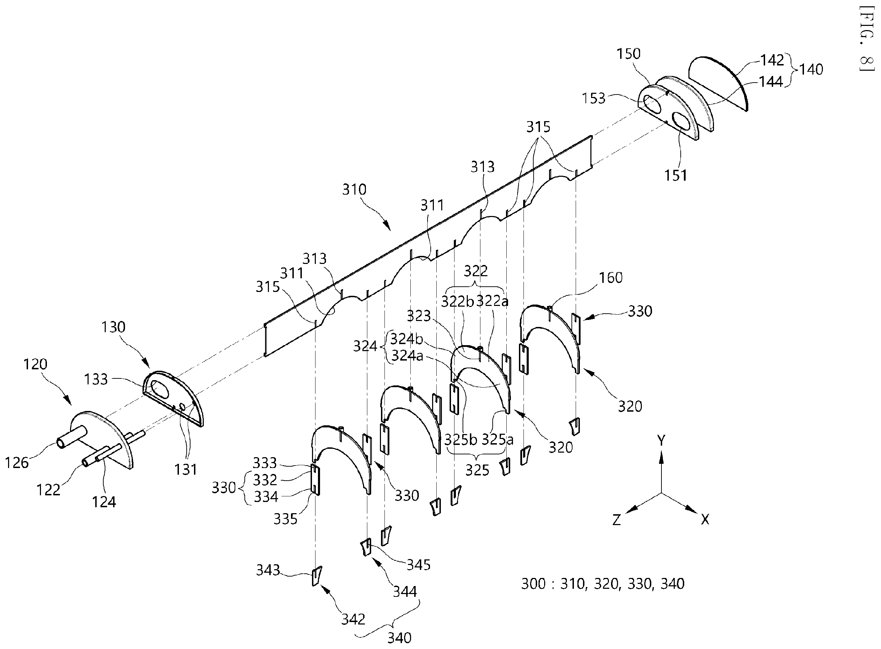

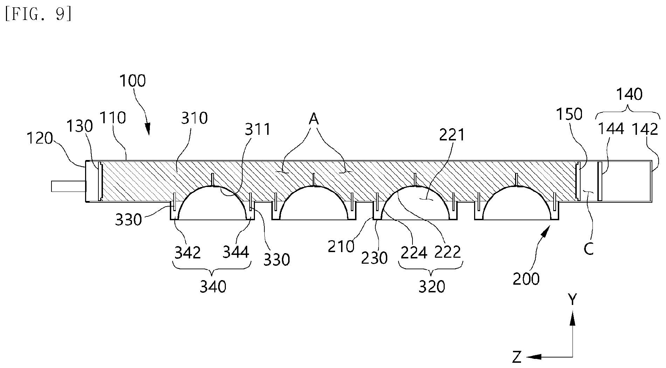

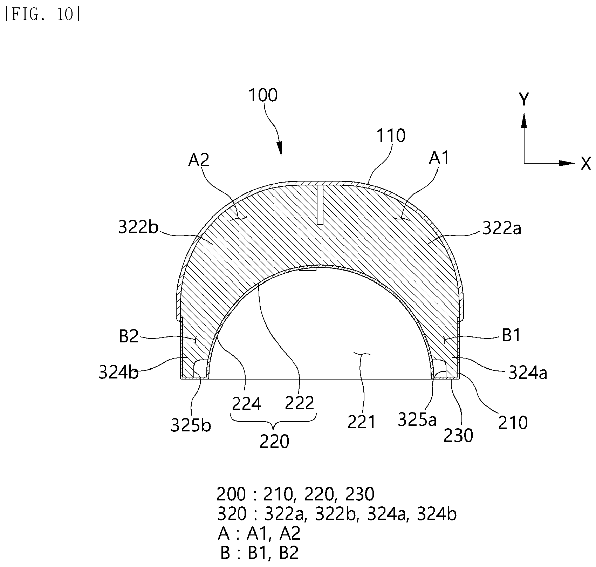

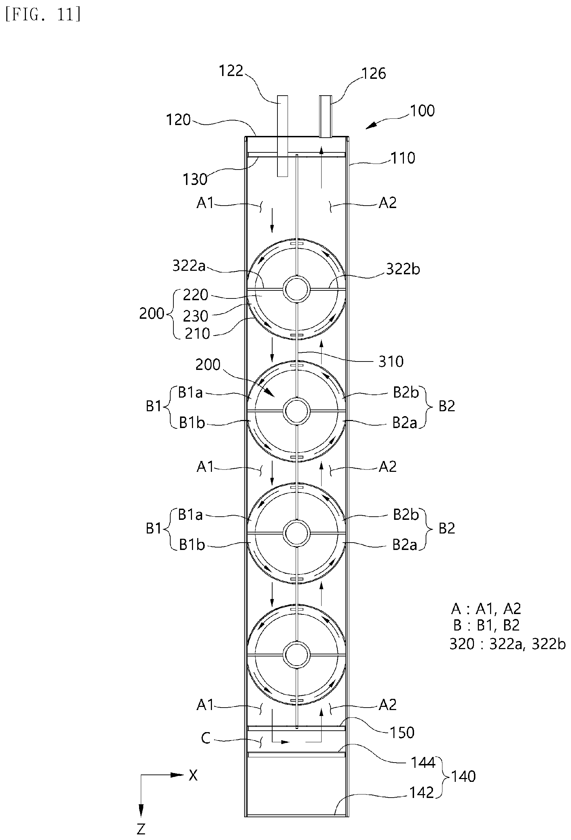

FIG. 4 is a cut perspective view showing the inside of a part of a main body part of an evaporator main body of an ice-making evaporator according to an exemplary embodiment of the present invention. FIG. 5 is a cut perspective view showing the inside of a part of an ice-making member of an ice-making evaporator according to an exemplary embodiment of the present invention. FIG. 6 is an exploded perspective view of an ice-making evaporator according to an exemplary embodiment of the present invention. FIG. 7 is a perspective view of an ice-making evaporator viewed from the upper side according to an exemplary embodiment of the present invention. In this case, the main body part of the evaporator main body and the ice-making member are shown in a dotted line and the components seen therethrough are shown in a solid line. FIG. 8 is an exploded perspective view of a closing cap, a separation member, a partition member, a main body space-dividing wall, a guide wall, a coupling member, and a heat exchange space-dividing wall of an ice-making evaporator according to an exemplary embodiment of the present invention. FIG. 9 is a cross-sectional view taken along the line I - I ' in FIG. 1. FIG. 10 is a cross-sectional view taken along the line II-II' in FIG. 1. FIG. 11 a transverse cross-sectional view of the ice-making evaporator shown in FIG. 1.

Referring to FIGS. 3 and 4, the evaporator main body 100 of the ice-making evaporator 1 according to an exemplary embodiment of the present invention may be formed of a main body part 110. The main body part 110 is configured to provide a main body space A through which refrigerant circulates, and may together perform a function of distributing the circulating refrigerant to a plurality of ice-making members 200.

The main body part 110 may be made of a material having a low heat transfer rate so as to prevent a decrease in cooling capacity of the refrigerant due to transfer of external thermal energy to the cold refrigerant flowing in the main body space A.

As in the illustrated embodiment, the main body part 110 may be formed of a hollow tube extending in the front-rear direction. However, the shape of the main body part 110 may be appropriately modified according to the shape of the space in which the ice-making evaporator 1 is disposed, the arrangement method of the ice-making members 200, etc. For example, at least a portion of the main body part 110 may be formed to be bent.

In this case, the main body part 110 may have a semi-spherical shape or a semi-elliptical shape in which a cross section perpendicular to the extension direction is convex upward. Since the refrigerant flows through the main body part 110, water vapor in the air may be condensed to form dew on the outer surface of the main body part 110, and with the configuration as described above, dew formed on the outer surface of the main body part 110 may flow downward along the slope of the outer surface.

Meanwhile, both ends of the main body part 110 may be open to the outside as shown. Referring to FIG. 4, in the illustrated embodiment, a first opening 111 is formed at the front side of the main body part 110 and a second opening 113 is formed at the rear side thereof.

In this case, a plurality of coupling holes 115 may be formed, along the front-rear direction, on the side portion in the extension direction of the main body part 110, that is, on the lower part in the illustrated embodiment. The ice-making members 200 described above may be coupled to the coupling holes 115, respectively.

As such, in the present embodiment, the ice-making member 200 and the main body part 110 are provided as separate members but are configured to be coupled by the coupling hole 115, but in another embodiment, the ice-making member 200 and the main body part 110 may be integrally formed to be provided as a single member.

According to the present embodiment, a plurality of first air holes 117 may be formed on the other side in the extension direction of the main body part 110, that is, the upper portion in the illustrated embodiment, along the arrangement direction of the ice-making member 200. One end of an air pipe 160 (shown in FIG. 8) to be described later may be inserted into the first air hole 117. The first air hole 117 will be described together with the air pipe 160 (shown in FIG. 8).

Referring to FIGS. 3 to 5, the ice-making member 200 of the ice-making evaporator 1 according to an exemplary embodiment of the present invention may include a body part 210, an ice-making part 220, and a bottom part 230.

As described above, the ice-making member 200 is a component that provides a mold to form ice, and may be made of a material having a high heat transfer rate to efficiently manufacture ice.

The body part 210 may have a heat exchange space B through which a refrigerant flows. In the illustrated embodiment, the body part 210 may be provided as a cylindrical member formed in the up-down direction. And, the upper portion of the body part 210 may be coupled to the coupling hole 115 of the main body part 110.

Accordingly, the heat exchange space B inside the body part 210 and the main body space A inside the main body part 110 are connected to each other to be in fluid communication with each other. However, as long as a heat exchange space B through which a refrigerant can flow can be provided inside, the shape of the body part 210 is not particularly limited.

An ice-making part 220 may be provided on the other side of the body part 210, for example, on the lower portion of the body part 210, as shown in FIG. 5. The ice-making part 220 is a component for manufacturing ice while being cooled by the refrigerant flowing through the main body space A and the heat exchange space B. To this end, an ice-making groove 221 may be formed in a lower portion of the ice-making part 220.

In this case, the ice-making part 220 may protrude upward from the body part 210 so as to pass through the inside of the body part 210. In the present embodiment, the ice-making part 220 has a spherical shape convex upward as shown in FIG. 5, but the upper portion of the ice-making part 220 may protrude upward from the body part 210.

Hereinafter, a convex outer surface of the ice-making part 220 protruding upward is referred to as a convex surface 220a. A portion of the ice-making part 220 protruding upward from the body part 210 is referred to as a first portion 222. And, another portion of the ice-making part 220 passing through the inside of the body part 210 is referred to as a second portion 224. In the present embodiment, the second portion 224 is provided around the first portion 222.

In this case, the ice-making part 220 may be provided with a concave surface 220b facing the convex surface 220a. The above-described ice-making groove 221 is provided on the concave surface 220b. The ice-making groove 221 may be open in the downward direction of the ice-making part 220.

According to the present embodiment, the first portion 222 is cooled in direct contact with the refrigerant flowing through the main body space A, and the second portion 224 is cooled by the refrigerant flowing through the heat exchange space B by flowing out of the main body space A.

As such, according to the present embodiment, at least a portion of the ice-making part 220 (i.e., the first portion 222) is disposed inside the main body space A to directly contact the cold refrigerant and be cooled, so that the cooling capacity of the refrigerant may be maximized, and so ice may be efficiently manufactured.

In addition, according to the present embodiment, at least a portion of the ice-making part 220, that is, the first portion 222, is inserted into the main body space A, so that the space occupied by the ice-making part 220 may be minimized, thereby increasing the efficiency of the space where the evaporator 1 is installed.

Referring to FIG. 5, a second air hole 223 to which the other end of the air pipe 160 (shown in FIG. 8) is coupled may be formed in the ice-making part 220. The second air hole 223 may be connected to the first air hole 117 (shown in FIG. 4) described above by the air pipe 160 (shown in FIG. 8).

The second air hole 223 may be positioned on the upper portion of the ice-making part 220 so that the ice release process may be smoothly performed. The second air hole 223 may be preferably positioned at the upper end of the ice-making part 220 to perform the ice release process more smoothly. Specific functions of the second air hole 223 will be described later together with the air pipe 160 (shown in FIG. 8).

Meanwhile, referring again to FIG. 5, the bottom part 230 is provided between the edge of the ice-making part 220 and the lower edge of the body part 210 in the illustrated embodiment. The bottom part 230 may be configured to close a lower portion of the heat exchange space B provided inside the body part 210. Accordingly, the heat exchange space B may be isolated from the outside, and the refrigerant flowing therethrough may be prevented from leaking to the outside.

In this case, the bottom part 230 may not be provided as necessary. For example, if the edge of the ice-making part 220 is in contact with the inner wall of the body part 210, and the edge of the ice-making part 220 can close the lower part of the heat exchange space B, the bottom part 230 may not be provided separately.

Meanwhile, the body part 210, the ice-making part 220, and the bottom part 230 may be integrally formed and provided as a single member, or may be provided as separate members and coupled to each other. In the latter case, each component may be made of different materials.

For example, in order to prevent the cooling capacity of the refrigerant from deteriorating due to the transfer of external thermal energy to the refrigerant in the heat exchange space B, the body part 210 and the bottom part 230 may be made of a material with low thermal conductivity, and in order to efficiently manufacture ice, the ice-making part 220 may be made of a material having high thermal conductivity.

Meanwhile, referring to FIGS. 6 and 7, closing caps 120 and 140 may be coupled to the main body part 110 of the evaporator main body 100 according to an exemplary embodiment of the present invention to close both ends opened to the outside.

In the illustrated embodiment, a first closing cap 120 is coupled to the first opening 111 provided at the front of the main body part 110, and a second closing cap 140 is coupled to the second opening 113 provided at the rear of the main body part 110.

The closing caps 120 and 140 may be made of metal and coupled to the end of the main body part 110 by a welding process or the like, or may be made of a flexible plastic or rubber material and fitted and coupled thereto.

As shown in FIG. 6, a refrigerant inlet pipe 122, a heat gas inlet pipe 124, and a discharge pipe 126 may be provided in the first closing cap 120.

The refrigerant inlet pipe 122 is a member that forms a flow passage through which a refrigerant flows into the main body space A of the main body part 110. The heat gas inlet pipe 124 is a member that forms a flow passage through which a hot heat gas flows into the main body space A of the main body part 110. In addition, the discharge pipe 126 is a member that forms a flow passage through which a refrigerant or heat gas flowing in the main body space A flows out.

In this case, one end of each of the refrigerant inlet pipe 122 and the heat gas inlet pipe 124 is located in a first main body space A1 to be described later, and one end of the discharge pipe 126 is located in a second main body space A2 to be described later. This will be described later together with the first and second main body spaces A1 and A2.

Meanwhile, in another embodiment, the heat gas inlet pipe 124 may not be provided as necessary. For example, in an embodiment where a heater for increasing the temperature of the ice-making member 200 is separately provided, the heat gas inlet pipe 124 may not be provided separately.

Referring to FIGS. 6 and 7, a plurality of second closing caps 140 may be formed. For example, as shown, the second closing cap 140 may consist of an outer second closing cap 142 and an inner second closing cap 144.

In the present embodiment, the outer second closing cap 142 may be coupled to the second opening 113 of the main body part 110, and the inner second closing cap 144 may be spaced apart from the second opening 113 toward the inside of the main body part 110 by a predetermined distance.

In this case, the space between the outer second closing cap 142 and the inner second closing cap 144 is fluidly isolated from the main body space A. Therefore, by adjusting the separation distance between the outer second closing cap 142 and the inner second closing cap 144, the section in which the refrigerant may flow in the inner space of the main body part 110 may be limited.

Meanwhile, a first partition member 130 may be placed at a position slightly spaced apart from the first closing cap 120 toward the inside of the main body part 110, and a second partition member 150 may be placed at a position slightly spaced apart from the second closing cap 140 toward the inside of the main body part 110. Detailed shapes and functions of the first partition member 130 and the second partition member 150 will be described later together with a separation member 300.

Referring to FIG. 6, the ice-making evaporator according to an exemplary embodiment of the present invention may further include a separation member 300. The separation member 300 is configured to divide the inner space of the evaporator main body 100 and the inner space of the ice-making member 200 into a plurality of spaces or to guide the refrigerant.

The partitioned spaces inside the evaporator main body 100 and the ice-making member 200 may be fluidly isolated from each other by the separation member 300. In this case, the fluid isolation of two spaces means that the two spaces are isolated so that they are not directly fluidly communicable with each other. Of course, two spaces directly isolated may be connected by different spaces, so that fluid communication may be indirectly performed.

Accordingly, the refrigerant introduced into the evaporator main body 100 may be forced to sequentially circulate through the plurality of spaces partitioned by the separation member 300, and the refrigerant circulating through the partitioned spaces may sequentially cool the plurality of ice-making members 200.

As such, in the present embodiment, since the refrigerant is forced to cool the ice-making member while circulating through a plurality of partitioned spaces, a contact time between the refrigerant and the ice-making member may be lengthened, and the cooling capacity of the refrigerant may be sufficiently exhibited.

In addition, according to the present embodiment, since the refrigerant sequentially circulates through a plurality of partitioned spaces and cools the ice-making member, the cooling capacity of the refrigerant may be evenly distributed to a plurality of ice-making members, thereby forming ice of uniform quality at the same speed for each of the plurality of ice-making members.

Hereinafter, a specific configuration of the separation member 300 according to an exemplary embodiment of the present invention and the first and second partition members 130 and 150 will be described.

Referring to FIGS. 7 to 9, the separation member 300 in the illustrated embodiment may include a main body space-dividing wall 310, a guide wall 320, a coupling member 330, and a heat exchange space-dividing wall 340.

The main body space-dividing wall 310 is provided to divide the main body space A provided inside the main body part 110 of the evaporator main body 100 into a first main body space A1 and a second main body space A2.

In the present embodiment, the first main body space A1 and the second main body space A2 may extend in the longitudinal direction of the main body part 110. To this end, the main body space-dividing wall 310 is disposed inside the main body space A and may be provided as a partition wall-shaped member extending in a direction parallel to the extension direction of the main body part 110.

More specifically, in the present embodiment, the main body space-dividing wall 310 is composed of a partition wall having a predetermined thickness in the left-right direction and extending in the front-rear direction. Accordingly, the main body space A may be divided into the first main body space A1 and the second main body space A2 by the main body space-dividing wall 310.

Hereinafter, a space located on a relatively right side of the first main body space A1 and the second main body space A2 is referred to as a first main body space A1, and a space located on a relatively left side is referred to as a second main body space A2.

Referring to FIGS. 8 and 9, in the present embodiment, a seating groove 311, a guide wall coupling groove 313, and a first coupling member groove 315 may be formed at a side part in the extension direction of the main body space-dividing wall 310.

In this case, the first portion 222 of the ice-making member 200 described above may be seated in contact with the seating groove 311. The seating groove 311 may have an inwardly concave shape corresponding to the shape of the first portion 222. The seating groove 311 may be provided in plural in accordance with the plurality of ice-making members 200, and the plurality of seating groove 311 may be spaced apart from each other at a predetermined interval corresponding to the arrangement of the ice-making members 200.

In addition, the guide wall 320 to be described later may be coupled to the guide wall coupling groove 313. The guide wall coupling groove 313 may be provided in plural corresponding to a plurality of guide wall 320. The plurality of guide wall coupling grooves 313 may be spaced apart from each other at a predetermined interval corresponding to the arrangement of the ice-making members 200.

In the present embodiment, since the guide wall 320 is disposed between the ice-making member 200 and the main body space-dividing wall 310, the guide wall coupling groove 313 is located at the inner center of the seating groove 311.

In this case, the guide wall coupling groove 313 may be open in the downward direction of the main body part 110 so that the guide wall 320 may pass through the coupling hole of the main body part 110 and be coupled to the main body space-dividing wall 310.

One side portion of the coupling member 330 to be described later may be coupled to the first coupling member groove 315. As will be specifically described later, the coupling member 330 is a component for assembling the heat exchange space-dividing wall 340 to be described later to the main body space-dividing wall 310.

In this case, as shown in FIG. 9, the heat exchange space-dividing wall 340 includes a front dividing wall 342 that divides the heat exchange space in front of the ice-making part 220 and a rear dividing wall 344 that divides the heat exchange space in rear of the ice-making part 220.

In the present embodiment, the coupling members 330 may be provided in a pair at the front and rear sides around the ice-making part 220. Accordingly, the coupling members 330 may couple the front dividing wall 342 and the rear dividing wall 344 to the main body space-dividing wall 310, respectively.

Correspondingly, the first coupling member grooves 315 may be formed in a pair along the front and rear sides. In other words, the first coupling member grooves 315 may be provided in a pair at the front and rear sides around the seating groove 311 in which the first portion 222 of the ice-making part 220 is seated.

Meanwhile, the pair of first coupling member grooves 315 may be provided in plural corresponding to the plurality of heat exchange space-dividing walls 340, and may be spaced apart from each other by a predetermined distance according to the arrangement method.

Referring to FIGS. 8 to 10, a heat exchange space-dividing wall 340 for dividing the heat exchange space B into a first heat exchange space B1 and a second heat exchange space B2 may be provided at a side part in the extension direction of the main body space-dividing wall 310.

The heat exchange space-dividing wall 340 includes a front dividing wall 342 that divides the front of the heat exchange space B in front of the ice-making part 220 and a rear dividing wall 344 that divides the rear of the heat exchange space B in rear of the ice-making part 220.

In the present embodiment, the front dividing wall 342 and the rear dividing wall 344 may be formed of a trapezoidal member with a predetermined thickness as illustrated.

In this case, a front second coupling member groove 343 to which a coupling member 330 to be described later can be coupled may be formed at the edge of the front dividing wall 342 at the evaporator main body 100 side. Likewise, a rear second coupling member groove 345 to which a coupling member 330 can be coupled may be formed at the edge of the rear dividing wall 344 at the evaporator main body 100 side.

As shown, so that the first heat exchange space B1 and the second heat exchange space B2 can be fluidly isolated from each other, the front dividing wall 342 and the rear dividing wall 344 are formed such that the upper edge thereof is in contact with the lower edge of the main body space-dividing wall 310, the edge thereof at the ice-making part 220 side is bent to contact the ice-making part 220, and the remaining edges thereof are in contact with the body part 210 and the bottom part 230.

Meanwhile, in the present embodiment, the first heat exchange space B1 is fluidly connected to the first main body space A1 and the second heat exchange space B2 is fluidly connected to the second main body space A2.

To this end, the heat exchange space-dividing walls 340 may be disposed in parallel on the same plane as the main body space-dividing wall 310. Of course, the relative arrangement relationship between the heat exchange space-dividing wall 340 and the main body space-dividing wall 310 is not limited to the above-described structure, and both components may have various arrangement relationships capable of connecting the first and second main body spaces A1 and A2 and the first and second heat exchange spaces B1 and B2, respectively.

Meanwhile, referring to FIGS. 6 to 9, a coupling member 330 may be provided between the heat exchange space-dividing wall 340 and the main body space-dividing wall 310.

As in the illustrated embodiment, when the heat exchange space-dividing wall 340 and the main body space-dividing wall 310 are disposed parallel to each other, it may be difficult to directly couple them to each other. To this end, the coupling member 330 may be provided between the main body space-dividing wall 310 and the heat exchange space-dividing wall 340 to mediate their coupling.

In this case, the coupling member 330 may be provided in a pair to couple the front dividing wall 342 and the rear dividing wall 344 to the main body space-dividing wall 310, respectively. The pair of coupling members 330 may be positioned in the front and rear directions around the ice-making part 220, respectively, corresponding to the front dividing wall 342 and the rear dividing wall 344.

As shown, the coupling member 330 may include a main body-side coupling part 332 coupled to the side in the extension direction of the main body space-dividing wall 310 and an ice-making member-side coupling part 334 coupled to the heat exchange space-dividing wall 340.

In this case, a main body space-dividing wall groove 333 may be formed at the main body-side coupling part 332. As shown, the main body space-dividing wall groove 333 may be configured to correspondingly be coupled to the first coupling member groove 315 of the main body space-dividing wall 310 described above.

In addition, a heat exchange space-dividing wall groove 335 may be formed at the ice-making member-side coupling part 334. The heat exchange space-dividing wall groove 335 may be configured to correspondingly be coupled to any one of the front second coupling member groove 343 of the front dividing wall 342 and the rear second coupling member groove 345 of the rear dividing wall 344 described above.

Referring to FIGS. 6 to 8, in the present embodiment, the coupling member 330 may be assembled (or coupled) with the main body space-dividing wall 310 disposed inside the main body part 110 through the coupling hole 115. Thereafter, the heat exchange space-dividing wall 340 may be assembled (or coupled) with the coupling member 330 assembled (or coupled) with the main body space-dividing wall 310 through the coupling hole 115.

As such, in the present embodiment, the main body space-dividing wall 310, the coupling member 330, and the heat exchange space-dividing wall 340 may be sequentially assembled (or coupled) through the coupling hole 115 of the main body part 110. Accordingly, manufacturing convenience and assemblability between components may be improved, and thus manufacturing cost may be reduced.

Meanwhile, in the present embodiment, the coupling member 330 is made of a rectangular member with a predetermined thickness as illustrated, but as long as the coupling member 330 may couple the main body space-dividing wall 310 and the heat exchange space-dividing wall 340, the shape of the coupling member 330 may be variously modified.

And in the present embodiment, the coupling member 330, the main body space-dividing wall 310, and the heat exchange space-dividing wall 340 are configured to be combined by grooves that are inserted correspondingly to each other, but the coupling member 330, the main body space-dividing wall 310, and the heat exchange space-dividing wall 340 may be coupled to each other by various known coupling structures, such as coupling through a hook-locking structure or the like.

Furthermore, the coupling member 330 may be configured to be integrally formed with at least one of the main body space-dividing wall 310 and the heat exchange space-dividing wall 340, and be coupled to the other. For example, the coupling member 330 and the heat exchange space-dividing wall 340 may be provided as one integrally formed member and coupled to the main body space-dividing wall 310 through the coupling hole 115 of the main body part 110.

Meanwhile, referring to FIGS. 7 to 10, the guide wall 320 may be coupled to the side in the extension direction of the main body space-dividing wall 310 as described above. In this case, the guide wall 320 may be disposed perpendicular to the main body space-dividing wall 310.

Referring to FIGS. 8 and 10, the guide wall 320 may include a main body space-side guide part 322 and a heat exchange space-side guide part 324. The main body space-side guide part 322 is configured to guide the refrigerant flowing in the main body spaces A1 and A2 to the heat exchange spaces B1 and B2. The main body space-side guide part 322 may include first and second main body space-side guide parts 322a and 322b.

The main body space-side guide part 322 may include a first main body space-side guide part 322a and a second main body space-side guide part 322b. The first main body space-side guide part 322a may be configured to be disposed in the first main body space A1 to guide the refrigerant flowing in the first main body space A1 to the first heat exchange space B1. The second main body space-side guide part 322b may be configured to be disposed in the second main body space A2 to guide the refrigerant flowing in the second main body space A2 to the second heat exchange space B2.

Meanwhile, a main body space-dividing wall coupling groove 323 may be provided at an upper portion of the main body space-side guide part 322. The main body space-dividing wall coupling groove 323 may be correspondingly coupled to the guide wall coupling groove 313 of the main body space-dividing wall 310 described above.

The heat exchange space-side guide part 324 is provided at one side of the main body space-side guide part 322, that is, a lower portion in the illustrated embodiment. The heat exchange space-side guide part 324 is configured to guide the flow of refrigerant flowing in the heat exchange spaces B1 and B2.

In this case, in the present embodiment, the heat exchange space-side guide part 324 may include first and second heat exchange space-side guide parts 324a and 324b. Referring to FIGS. 8, 10, and 11, the first heat exchange space-side guide part 324a may be disposed in the first heat exchange space B1 to divide the first heat exchange space B1 into a first passing space B1a and a second passing space B1b.

The first heat exchange space-side guide part 324a may extend from the first main body space-side guide part 322a to the first heat exchange space B1 to guide the flow in the up-down direction of the refrigerant flowing in the first heat exchange space B1.

In other words, in the illustrated embodiment, the first heat exchange space-side guide part 324a may extend in the up-down direction along the first heat exchange space B1. In this case, one side of the first heat exchange space-side guide part 324a, that is, the left side portion viewed in FIG. 10, may be formed to correspond to the shape of the ice-making part 220, and may be arranged to be in contact with the ice-making part 220.

Meanwhile, a first flow groove 325a may be formed at an end portion in the extension direction of the first heat exchange space-side guide part 324a, that is, at a lower end portion in the illustrated embodiment. Accordingly, the first passing space B1a and the second passing space B1b may be fluidly communicatively connected between the first flow groove 325a and the inner wall of the ice-making member 200.

In this case, the first flow groove 325a may be located adjacent to the ice-making groove 221 (or the ice-making part 220). In the present embodiment, as shown in FIG. 10, the first flow groove 325a is positioned on the left side of the lower end portion of the first heat exchange space-side guide part 324a.

Accordingly, according to the present embodiment, since the refrigerant flowing in the first passing space B1a can flow into the second passing space B1b only when it reaches the lower end of the ice-making member 200, the entire area of the ice-making part 220 may be cooled by the refrigerant flowing in the first passing space B1a.

In addition, according to the present embodiment, since the first flow groove 325a is located adjacent to the ice-making groove 221 (or the ice-making part 220), the refrigerant flowing in the first passing space B1a is forced to flow in contact with the circumference portion of the ice-making part 220 in order to flow into the second passing space B1b. For this reason, the refrigerant and the ice-making part 220 may come into contact with each other in a large area, and thus the ice-making part 220 may be effectively cooled.

Meanwhile, in the present embodiment, the first flow groove 325a is positioned adjacent to the ice-making groove 211 (or the ice-making part 220), but as long as the refrigerant may sufficiently cool the ice-making part 220, the first flow groove 325a may be formed in another portion of the first heat exchange space-side guide part 324a. Furthermore, a flow hole that may replace the function of the first flow groove 325a may be formed in the first heat exchange space-side guide part 324a.

Referring to FIG. 10, the second heat exchange space-side guide part 324b may be provided on one side of the second main body space-side guide part 322b. In this case, since the second heat exchange space-side guide part 324b may be formed symmetrically with the first heat exchange space-side guide part 324a around the ice-making part 220, the detailed structure of the second heat exchange space-side guide part 324b will be replaced by the description of the first heat exchange space-side guide part 324a described above.

Meanwhile, referring to again FIGS. 7 and 8, as shown, the first and second partition members 130 and 150 described above may be provided at both ends in the longitudinal direction of the main body space-dividing wall 310, respectively.

In the present embodiment, the first partition member 130 is positioned at the end of the main body space-dividing wall 310 at the first closing cap 120 side, that is, the front end in the illustrated embodiment.

The first partition member 130 is a component for preventing a refrigerant flowing in the first main body space A1 (or the second main body space A2) from circling the rear end of the main body space-dividing wall 310 into the second main body space A2 (or the first main body space A1).

The first partition member 130 divides a predetermined space provided between the first closing cap 120 and the main body space-dividing wall 310 and the main body space A, and closes the front end side of the first main body space A1. Accordingly, the front end side of the first main body space A1 and the front end side of the second main body space A2 may be fluidly isolated from each other by the first partition member 130.

A plurality of inlet pipe through hole 131 are formed at a portion, facing the first main body space A1, of the first partition member 130. In the illustrated embodiment, two inlet pipe through holes 131 are provided.

The refrigerant inlet pipe 122 and the heat gas inlet pipe 124 described above are coupled through the plurality of inlet pipe through holes 131, respectively. And, a communication hole 133, which communicates with the front end side of the second main body space A2, is formed at a portion, facing the second main body space A2, of the first partition member 130.

In the present embodiment, an end of the refrigerant inlet pipe 122 and an end of the heat gas inlet pipe 124 are located in rear of the first partition member 130, and an end of the discharge pipe 126 is located in front of the first partition member cap 130.

Accordingly, the refrigerant or heat gas from the refrigerant inlet pipe 122 or the heat gas inlet pipe 124 is blocked by the first partition member 130 and cannot flow forward, and is forced to flow backward along the first main body space A1.

In addition, the refrigerant or heat gas introduced into the communication hole 133 from the second main body space A2 is blocked by the first partition member 130 and cannot flow into the first main body space A1, and is forced to flow into the discharge pipe 126.

Meanwhile, referring to FIGS. 7 and 8, a circling space C may be provided on one side of the main body space A inside the main body part 110, that is, at the rear end of the main body space A in the illustrated embodiment. In this case, the second partition member 150 is positioned between the main body space A and the circling space C to divide the main body space A and the circling space C.

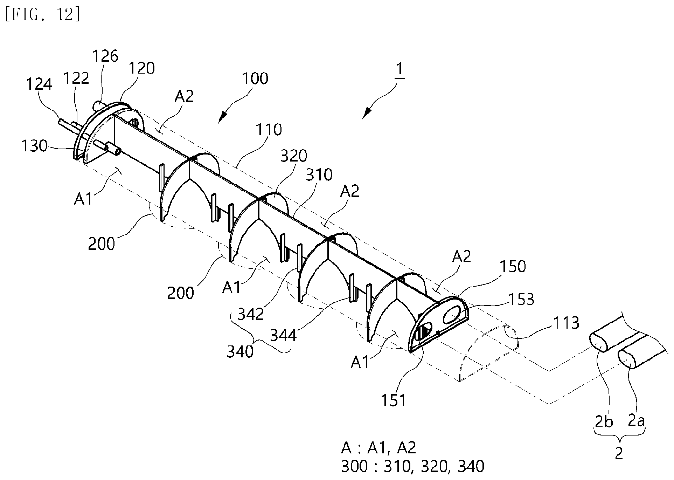

The second partition member 150 is a component for checking whether the internal spaces of the evaporator main body 100 and the ice-making member 200 are divided so as to be fluidly isolated from each other by the separation member 300. The specific function of the second partition member 150 related to this will be described later with reference to FIG. 12.

The second partition member 150 may be made of a material such as metal, and may be coupled to the inner wall of the main body part 110 by a welding process or the like. In this case, first and second holes 151 and 153 may be formed in the second partition member 150.

In the present embodiment, the first hole 151 may fluidly connect the first main body space A1 and the circling space C to be communicable, and the second hole 153 may fluidly connect the second main body space A2 and the circling space C to be communicable.

Accordingly, the refrigerant flowing in the first main body space A1 may flow into the circling space C through the first hole 153a and then into the second main body space A2 through the second hole 153b.

Meanwhile, referring to FIGS. 5 to 7, an air pipe 160 may be provided inside the main body part 110. The air pipe 160 is provided to smoothly perform the ice release process of the ice formed in the ice-making member 200.

Both ends of the air pipe 160 may be coupled to the first air hole 117 (shown in FIG. 4) of the main body part 110 and the second air hole 223 (shown in FIG. 5) of the ice-making part 220, respectively, described above. To this end, the air pipe 160 may extend in the up-down direction while crossing the main body space A. Of course, the air pipe 160 may be disposed to be slightly inclined in the front-rear direction or the left-right direction.

The upper portion of the ice-making groove 221 of the ice-making part 220 may communicate with the outside through the air pipe 160. As a result, when the ice is removed from the ice-making groove 221, external air may be introduced into the ice-making groove 221 through the air pipe 160, so that the ice release process may be performed smoothly.

In addition, in the present embodiment, the air pipe 160 extends in the up-down direction to prevent the air pipe 160 from being blocked by ice or water, so even if it is configured that the refrigerant cools the ice-making member 200 above the ice-making member 200, the ice release process may be carried out smoothly.

Hereinafter, a process in which the refrigerant flows in the ice-making evaporator according to the present embodiment will be described.

Referring to FIG. 11, in an embodiment of the present invention, cold refrigerant may flow into the first main body space A1 from the refrigerant inlet pipe 122. The introduced refrigerant flows backward along the extension direction of the first main body space A1.

The refrigerant flowing in the first main body space A1 flows out into the first passing space B1a of the first heat exchange space B1 from the first main body space A1 by the first main body space-side guide part 322a.

Referring to FIGS. 11 and 10, the refrigerant introduced into the first passing space B1a is guided to the lower end of the first passing space B1a by the first heat exchange space-side guide part 324a, and the guided refrigerant cools the right front part of the ice-making part 220.

The refrigerant reaching the lower end of the first passing space B1a passes through the first flow groove 325a and flows out from the lower end of the first passing space B1a to the lower end of the second passing space B1b.

The refrigerant introduced into the lower end of the second passing space B1b is guided to the upper portion of the second passing space B1b by the first heat exchange space-side guide part 324a, and cools the right rear part of the ice-making part 220.

The refrigerant repeatedly performs the above-described process along the extension direction of the first main body space A1, sequentially passing through the plurality of first heat exchange spaces B1, and the right side portions of the plurality of ice-making parts 220 arranged in a row may be entirely cooled by the refrigerant.

Referring to FIG. 11, the refrigerant reaching the front end of the first main body space A1 passes through the second partition member 150 and flows into the circling space C. The refrigerant introduced into the circling space C passes through the second partition member again and flows out from the circling space C toward the front end of the second main body space A2.

Referring to FIGS. 10 and 11, the refrigerant introduced into the second main body space A2 flows out from the second main body space A2 into the first passing space B2a of the second heat exchange space B2 by the second main body space-side guide part 322b.

The refrigerant introduced into the first passing space B2a is guided to the lower end of the first passing space B2a by the second heat exchange space-side guide part 324b, and the guided refrigerant cools the left rear part of the ice-making part 220.

The refrigerant reaching the lower end of the first passing space B2a passes through the second flow groove 325b and flows out from the lower end of the first passing space B2a into the lower end of the second passing space B2b.

The refrigerant introduced into the lower end of the second passing space B2b is guided to the upper end of the second passing space B2b by the second heat exchange space-side guide part 324b, and the guided refrigerant cools the left front part of the ice-making part 220.

The refrigerant repeatedly performs the above-described process along the extension direction of the second main body space A2, sequentially passing through the plurality of second heat exchange spaces B2, and the left side portions of the plurality of ice-making parts 220 arranged in a row may be entirely cooled by the refrigerant.

As such, in the present embodiment, since the refrigerant circulates through the partitioned spaces A1, A2, B1, and B2 inside the evaporator main body 100 and the ice-making member 200, the plurality of ice-making members 200 may be sequentially cooled.

Therefore, according to the present embodiment, the contact time between the refrigerant and the ice-making member 200 may be prolonged, so that the cooling capacity of the refrigerant may be maximized, and ice may be manufactured efficiently.

In addition, according to the present embodiment, since the cooling capacity of the refrigerant may be evenly distributed to the plurality of ice-making members 200, so that the plurality of ice-making members 200 may be cooled uniformly, ice of uniform quality may be simultaneously formed in each of the plurality of ice-making members 200.

Meanwhile, when the ice release process is performed, the heat gas discharged from the heat gas inlet pipe 124 (shown in FIG. 7) may circulate through the main body space A, the heat exchange space B, and the circling space C, thereby increasing the temperature of the ice-making member 200.

Hereinafter, functions of the second partition member according to an exemplary embodiment of the present invention will be described in detail.

FIG. 12 is a view for describing a process of checking whether spaces partitioned using a second partition member inside an evaporator main body and inside an ice-making member are fluidly isolated in an ice-making evaporator according to an exemplary embodiment of the present invention.

Referring to FIG. 12, in the ice-making evaporator 1 according to an exemplary embodiment of the present invention, the second closing cap 140 (see FIG. 4) is not installed in the second opening 113 of the main body part 110, and thus one side of the main body space A may be open to the outside. Hereinafter, the above-described state is referred to as an inspection preparation state.

In the inspection preparation state, an inspection member 2 may be inserted into the main body part 110 through the open second opening 113. The inspection member 2 is a member for inspecting whether the partitioned inner spaces of the ice-making evaporator 1 are fluidly isolated from each other, and may be provided as a separate member different from the ice-making evaporator 1.

As described above, the second partition member 150 is disposed inside the second opening 113. In other words, the second partition member 150 is positioned on the rear end of the main body space-dividing wall 310. The inspection member 2 may include a first inspection cap 2a corresponding to the first hole 151 and a second inspection cap 2b corresponding to the second hole 153.

To inspect whether it is isolated, the first inspection cap 2a may be inserted into the first hole 151 to close the first hole 151, and the second inspection cap 2b may be inserted into the second hole 153 to close the second hole 153.

Hereinafter, a state in which the first and second holes 151 and 153 are closed by the inspection member 2 is referred to as an inspection preparation complete state. In addition, a space formed by connecting the first main body space A1 and the first heat exchange space B1 is referred to as a first inspection target space A1, B1, and a space formed by connecting the second main body space A2 and the second heat exchange space B2 is referred to as a second inspection target space A2, B2.

If the separation member 300 performs its original function, the first inspection target space A1, B1 and the second inspection target space A2, B2 will be fluidly isolated from each other in the inspection preparation complete state.

In this case, the characteristics of the inspection target spaces A1, B1, A2, B2 may be checked to confirm whether the first inspection target space A1, B1 and the second inspection target space A2, B2 are completely fluidly isolated by the separation member 300.

In the present embodiment, in order to confirm the characteristics of the inspection target spaces A1, B1, A2, B2, a predetermined fluid is injected into the first inspection target space A1, B1 through the refrigerant inlet pipe 122 or the heat gas inlet pipe 124, and the physical state of the injected fluid is checked. In this case, the predetermined fluid may be air compressed at a high pressure.

In the present embodiment, in order to check the physical state of the injected fluid, it is checked whether the injected fluid leaks from the first inspection target space A1, B1 to the second inspection target space A2, B2. In this case, whether it is leaked may be determined by checking whether the injected fluid is discharged through the discharge pipe 126.

If there is no fluid flowing out through the discharge pipe 126, it may be determined that the first inspection target space A1, B1 and the second inspection target space A2, B2 are completely fluidly isolated by the separation member 300, and if there is a fluid flowing out through the discharge pipe 126, it may be determined that the separation member 300 is defective.

In the ice-making evaporator 1, which has a defect in the separation member 300, the refrigerant introduced into the inside may directly leak into the space connected to the discharge pipe 126 and be discharged to the outside. Such an ice-making evaporator 1 having a defect cannot fully exhibit the cooling capacity of the refrigerant, and if the degree is severe, ice cannot be manufactured.

Therefore, it is preferable that the ice-making evaporator 1, which is determined to have a defect in the separation member 300, is discarded or repaired for the defective part and then inspected for isolation again according to the above-described process.

As such, according to the ice-making evaporator 1 according to the present embodiment, by using the second partition member 150, it is possible to prevent the manufacture of an ice-making evaporator with poor ice-making performance, that is, a defective product.

Hereinafter, a method for manufacturing an ice-making evaporator according to an exemplary embodiment of the present invention will be described with different drawings.

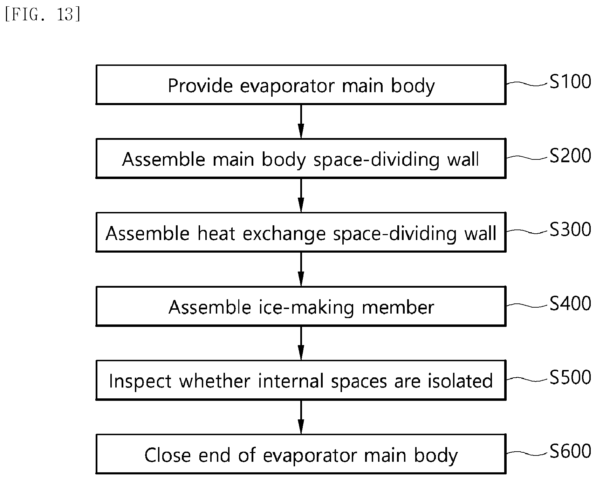

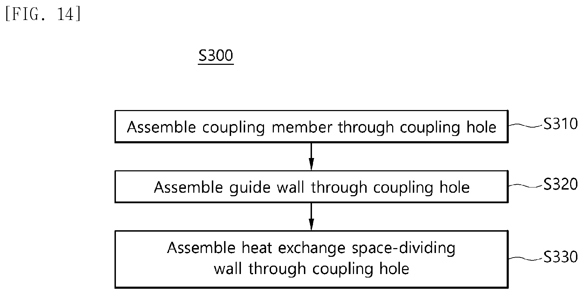

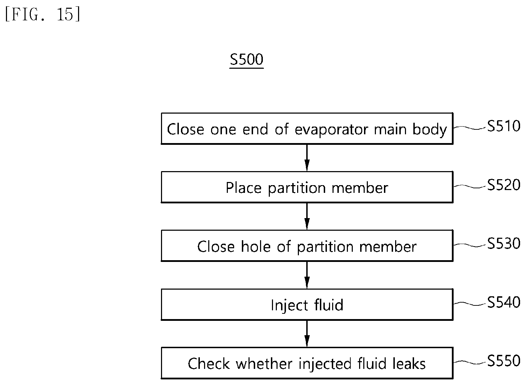

FIG. 13 is a flowchart of a method for manufacturing an ice-making evaporator according to an exemplary embodiment of the present invention. FIG. 14 is a detailed flowchart of a step of assembling a heat exchange space-dividing wall in a method for manufacturing an ice-making evaporator according to an exemplary embodiment of the present invention. FIG. 15 is a detailed flowchart of a step of inspecting whether partitioned internal spaces of an evaporator main body and an ice-making member are isolated in a method for manufacturing an ice-making evaporator according to an exemplary embodiment of the present invention.

To help understand the present invention, in the present disclosure, a process of manufacturing the ice-making evaporator shown in FIGS. 1 to 12 by the method for manufacturing an ice-making evaporator according to an exemplary embodiment of the present invention will be described.

Referring to FIG. 13 together with FIGS. 3 and 4, in the method for manufacturing an ice-making evaporator according to an exemplary embodiment of the present invention, an evaporator main body 100 is provided (S100). In this case, the evaporator main body 100 may be formed of a main body part 110.

As described above, the main body part 110 may be formed of a hollow tubular member with both ends open. One side of the main body part 110 perpendicular to the longitudinal direction may be formed to have a semicircular or semi-elliptical shape.

In addition, the other side of the main body part 110 may be formed to have a flat surface. A plurality of coupling holes 115 may be formed along the longitudinal direction in the flat portion of the main body part 110. To this end, the main body part 110 may be manufactured by processing a circular pipe through a forging process or a punching process or the like.

As such, according to the present embodiment, the evaporator main body 100 can be manufactured through a simple process with a circular pipe, which is a relatively inexpensive raw material, reducing manufacturing cost and simplifying the manufacturing process.

Referring back to FIG. 13 together with FIGS. 4 and 7, in the method for manufacturing an ice-making evaporator according to an exemplary embodiment of the present invention, after the evaporator main body 100 is provided (S100), a main body space-dividing wall 310 is assembled to the evaporator main body 100 (S200).

The main body space A inside the evaporator main body 100 is divided into a first main body space A1 and a second main body space A2 by the main body space-dividing wall 310.

In this case, in the step of assembling the main body space-dividing wall 310 (S200), the main body space-dividing wall 310 may be inserted inward through any one of the first and second openings 111 and 113 of the main body part 110. Accordingly, the main body space-dividing wall 310 may be assembled to the evaporator main body 100.

As such, according to the present embodiment, in order to assemble the main body space-dividing wall 310 inside the evaporator main body 100, there is no need to transform or process the shape of the main body part 110 by an additional process, so manufacturing costs can be reduced and the manufacturing process can be simplified.

In addition, according to the present embodiment, since the shape of the components constituting the ice-making evaporator is simple and the coupling relationship is simple, manufacturing costs can be reduced and the manufacturing process can be simplified.

Referring back to FIG. 13 together with FIGS. 6 to 10, in the method for manufacturing an ice-making evaporator according to an exemplary embodiment of the present invention, after assembling the main body space-dividing wall (S200), the heat exchange space-dividing wall 340 which may divide the heat exchange space B of the ice-making member 200 into a first heat exchange space B1 and a second heat exchange space B2 is assembled to any one of the evaporator main body 100 and the main body space-dividing wall 310 (S300).

More specifically, in the present embodiment, the heat exchange space-dividing wall 340 is coupled to the side in the longitudinal direction of the main body space-dividing wall 310.

Referring to FIG. 14 together, in the step S300 of assembling the heat exchange space-dividing wall 340, the main body space-dividing wall groove 333 of the coupling member 330 may be correspondingly coupled to the first coupling member groove 315 of the main body space-dividing wall 310 through the coupling hole 115 of the main body part 110 to assemble the coupling member 330 and the main body space-dividing wall 310 (S310).

In addition, in the step of assembling the heat exchange space-dividing wall 340 (S300), after assembling the coupling member 330 (S310), the main body space-dividing wall coupling groove 323 of the guide wall 320 may be correspondingly coupled to the guide wall coupling groove 313 of the main body space-dividing wall 310 through the coupling hole 115 of the main body part 110 to assemble the main body space-dividing wall 310 and the guide wall 320 (S320).

In this case, the order of the step of assembling the coupling member 330 and the main body space-dividing wall 310 (S310) and the step of assembling the guide wall 320 and the main body space-dividing wall 310 (S320) may be reversed.

Meanwhile, referring back to FIG. 14, in the step S300 of assembling the heat exchange space-dividing wall 340, after assembling (or coupling) the guide wall 320 (S320), the second coupling member grooves 343 and 345 of the heat exchange space-dividing wall 340 may be correspondingly coupled to the heat exchange space-dividing wall groove 335 of the coupling member 330 assembled with the main body space-dividing wall 310 through the coupling hole 115 of the main body part 110 to assemble the coupling member 330 and the heat exchange space-dividing wall 310 (S330).

In this case, the order of the step of assembling the guide wall 320 and the main body space-dividing wall 310 (S320) and the step of assembling the heat exchange space-dividing wall 340 and the coupling member 330 (S330) may be reversed.

As such, according to the present embodiment, the main body space-dividing wall 310, the guide wall 320, the coupling member 330, and the heat exchange space-dividing wall 340 may be sequentially assembled through the coupling hole 115 of the main body part 110, thereby improving manufacturing convenience and assemblability between components, thereby reducing manufacturing costs and simplifying manufacturing process.

In addition, according to the present embodiment, since the shape of the components constituting the ice-making evaporator is simple and the coupling relationship is simple, manufacturing costs can be reduced and the manufacturing process can be simplified.

Meanwhile, in the step of assembling the heat exchange space-dividing wall 340 (S300), the evaporator main body 100, the main body space-dividing wall 310, the guide wall 320, the coupling member 330, and the heat exchange space-dividing wall 340 may be coupled to each other.

The step of coupling the evaporator main body 100, the main body space-dividing wall 310, the guide wall 320, the coupling member 330, and the heat exchange space-dividing wall 340 to each other may be performed by any one of a laser welding process, a brazing welding process using welding powder or welding paste, and a high-frequency welding process.

Referring back to FIG. 13 together with FIGS. 5 to 10, in the method for manufacturing an ice-making evaporator according to an exemplary embodiment of the present invention, after assembling the evaporator main body 100 and the heat exchange space-dividing wall 340 (S300), the ice-making member 200 is assembled to the evaporator main body 100 (S400).

In the step of assembling the ice-making member 200 (S400), the upper portion of the body part 210 of the ice-making member 200 may be inserted into the coupling hole 115 of the main body part 110. Accordingly, the heat exchange space B inside the ice-making member 200 is divided into a first heat exchange space B1 and a second heat exchange space B2 by the heat exchange space-dividing wall 340.

The first heat exchange space B1 is fluidly connected to the first main body space A1 and the second heat exchange space B2 is fluidly connected to the second main body space A2.

In this case, in the step of assembling the ice-making member 200 to the evaporator main body 100 (S400), the ice-making member 200 and the evaporator main body 100 may be coupled to each other. The step of coupling the ice-making member 200 and the evaporator main body 100 to each other may be performed by any one of a laser welding process, a brazing welding process using welding powder or welding paste, and a high-frequency welding process.

Referring back to FIG. 13 together with FIGS. 11 and 12, in the method for manufacturing an ice-making evaporator according to an exemplary embodiment of the present invention, after assembling the evaporator main body 100 and the ice-making member 200 (S400), it is inspected whether the partitioned spaces inside the evaporator main body 100 and the ice-making member 200 are isolated from each other (S500).

Referring to FIG. 15 together, in the step of checking whether it is isolated (S500), any one of both open ends of the evaporator main body 100 may be closed (S510). In the present embodiment, the first partition member 130 is placed at one end of the main body space-dividing wall 310 through the first opening 111 (shown in FIG. 4) in the front of the main body part 110 and the first opening 111 (shown in FIG. 4) is closed with the first closing cap 120.

To this end, the first closing cap 120 may be coupled to one end of the main body part 110. The process of coupling the first closing cap 120 to the main body part 110 may be performed by any one of a laser welding process, a brazing welding process using welding powder or welding paste, and a high-frequency welding process.

Meanwhile, in the step of inspecting whether it is isolated (S500), after one end of the evaporator main body 100 is closed (S510), the second partition member 150 is placed inside the evaporator main body 100 through the other open end of the evaporator main body 100 (S520). In this case, the order of the step of closing one end of the evaporator main body 100 (S510) and the step of placing the second partition member 150 (S520) may be reversed.

In the step of placing the second partition member 150 (S520), the second partition member 150 may be placed at the other end of the main body space-dividing wall 310 through the open second opening 113 (shown in FIG. 4) of the main body part 110.

Referring to FIG. 15 together, in the step of inspecting whether it is isolated (S500), after placing the second partition member 150 inside the evaporator main body 100 (S520), the first and second holes 151 and 153 of the second partition member 150 are closed with the first and second inspection caps 2a and 2b, respectively (S530).

Accordingly, the first main body space A1 and the first heat exchange space B1 communicating with the first main body space A1 may be fluidly isolated from the second main body space A2 and the second heat exchange space B2 communicating with the second main body space A2.

Hereinafter, the first main body space A1 and the first heat exchange space B1 are referred to as a first inspection target space A1, B1, and the second main body space A2 and the second heat exchange space B2 are referred to as a second inspection target space A2, B2.

Referring to FIG. 15 together, in the step of inspecting whether it is isolated (S500), after the first and second holes 151 and 153 of the second partition member 150 are closed (S530), a predetermined fluid is injected into any one of the first inspection target space A1, B1 and the second inspection target space A2, B2 (S540), and whether the fluid injected into the other of the first inspection target space A1, B1 and the second inspection target space A2, B2 leaks is checked (S550).

In the present embodiment, whether the injected fluid leaks is checked to determine whether the first inspection target space A1, B1 and the second inspection target space A2, B2 are fluidly isolated from each other.

In this case, a more detailed process of the step of checking whether it is isolated (S500) may be performed as described above with reference to FIG. 12, and a detailed description thereof will be omitted.

Referring back to FIGS. 7 and 13, in the method for manufacturing an ice-making evaporator according to an exemplary embodiment of the present invention, after inspecting whether it is isolated (S500), the open end of the evaporator main body 100, that is, the second opening 113 (shown in FIG. 4), is closed (S600). In this case, in the step of closing the end of the evaporator main body 100 (S600), the second opening 113 (shown in FIG. 4) of the main body part 110 may be closed using the second closing cap 140.

Here, in the step of closing the end of the evaporator main body 100 (S600), if the result obtained in the step of inspecting whether it is isolated (S500) includes information that the first inspection target space A1, B1 and the second inspection target space A2, B2 are not completely isolated from each other, it is determined that the ice-making evaporator is defective, and a step of discarding or repairing may be additionally performed.

Accordingly, according to the method for manufacturing an ice-making evaporator according to an exemplary embodiment of the present invention, it is possible to prevent the manufacture of an ice-making evaporator, that is, a defective product, whose ice making performance is poor because the inner space is not completely partitioned.

Meanwhile, in the step of closing the end of the evaporator main body 100 (S600), if the result obtained in the step of inspecting whether it is isolated (S500) includes information that the first inspection target space A1, B1 and the second inspection target space A2, B2 are completely isolated from each other, the inner second closing cap 144 may be placed inside the main body part 110 through the open second opening 113 (shown in FIG. 4), the outer second closing cap 142 may be installed at the end of the main body part 110, and the inner and outer second closing caps 142 and 144 may be coupled to the main body part 110.

In this case, at least one of the steps of coupling the inner and outer second closing caps 142 and 144 to the main body part 110 may be performed by any one of a laser welding process, a brazing welding process using welding powder or welding paste, and a high-frequency welding process.

As described above, according to the method for manufacturing an ice-making evaporator according to an exemplary embodiment of the present invention, the ice-making evaporator shown in FIGS. 1 to 12 may be manufactured. However, in addition to the ice-making evaporator shown in FIGS. 1 to 12, the method for manufacturing an ice-making evaporator according to an exemplary embodiment of the present invention may be applied to manufacture another ice-making evaporator configured such that cold refrigerant circulates through a plurality of spaces that are partitioned in order to manufacture ice having a predetermined shape.

Although exemplary embodiments of the present invention have been described above, the idea of the present invention is not limited to the embodiments set forth herein. Those of ordinary skill in the art who understand the idea of the present invention may easily propose other embodiments through supplement, change, removal, addition, etc. of elements within the scope of the same idea, but the embodiments will be also within the idea scope of the present invention.

## Claims

1. An ice-making evaporator, comprising:
an evaporator main body having a main body space therein extending in the front-rear direction to allow refrigerant to flow;
a main body space-dividing wall extending in the same direction as the main body space to divide the main body space into a first main body space and a second main body space;
an ice-making member having a heat exchange space therein in fluid communication with the main body space, and an ice-making groove formed on the outer portion thereof;
a heat exchange space-dividing wall disposed in the heat exchange space such that the heat exchange space is divided into a first heat exchange space in fluid communication with the first main body space and a second heat exchange space in fluid communication with the second main body space;
a coupling member interposed between the main body space-dividing wall and the heat exchange space-dividing wall to couple the main body space-dividing wall and the heat exchange space-dividing wall;
a refrigerant inflow passage connected to the first main body space to introduce a refrigerant into the first main body space; and
an outlet passage connected to the second main body space to discharge a refrigerant flowing in the second main body space to the outside.

2. The ice-making evaporator of claim 1, wherein the coupling member comprises a main body-side coupling part coupled to a side in the extension direction of the main body space-dividing wall and an ice-making member-side coupling part coupled to the heat exchange space-dividing wall.

3. The ice-making evaporator of claim 2,
wherein a first coupling member groove is formed on the side in the extension direction of the main body space-dividing wall, and
wherein a main body space-dividing wall coupling groove correspondingly coupled to the first coupling member groove is formed at the main body-side coupling part of the coupling member.

4. The ice-making evaporator of claim 2,
wherein a second coupling member groove is formed at an edge of the heat exchange space-dividing wall with the edge facing the evaporator main body, and
wherein a heat exchange space-dividing wall coupling groove correspondingly coupled to the second coupling member groove is formed at the ice-making member-side coupling part of the coupling member.

5. An ice-making evaporator, comprising:
an evaporator main body having a main body space therein extending in the front-rear direction to allow refrigerant to flow;
a main body space-dividing wall extending in the same direction as the main body space to divide the main body space into a first main body space and a second main body space;
an ice-making member comprising: a body part having an upper portion coupled to the evaporator main body and having a heat exchange space therein in fluid communication with the main body space, and an ice-making member provided below the body part and having an ice-making groove formed at a lower portion of the ice-making member;
a heat exchange space-dividing wall disposed in the heat exchange space such that the heat exchange space is divided into a first heat exchange space in fluid communication with the first main body space and a second heat exchange space in fluid communication with the second main body space;
a coupling member interposed between the main body space-dividing wall and the heat exchange space-dividing wall to couple the main body space-dividing wall and the heat exchange space-dividing wall;
a refrigerant inflow passage connected to the first main body space to introduce a refrigerant into the first main body space; and
an outlet passage connected to the second main body space to discharge a refrigerant flowing in the second main body space to the outside,
wherein the ice-making part comprises a first portion located in the main body space and a second portion formed around the first portion to cross the interior of the body part.

6. The ice-making evaporator of claim 5,
wherein the ice-making part has a convex surface protruding convexly toward the evaporator main body and a concave surface facing the convex surface, and
wherein the ice-making groove is formed on the concave surface.

7. The ice-making evaporator of claim 5, wherein a seating groove in contact with at least a portion of the first portion is formed on a side in the extension direction of the main body space-dividing wall.

8. The ice-making evaporator of claim 5, wherein the heat exchange space-dividing wall comprises a front space-dividing wall and a rear space-dividing wall respectively disposed in front and rear of the second portion when viewed in the extension direction of the evaporator main body.

9. The ice-making evaporator of any one of claims 1 and 5,
further comprising a guide wall coupled to the main body space-dividing wall,
wherein the guide wall comprises a first main body space-side guide part disposed in the first main body space to guide a refrigerant flowing from one end to the other end of the first main body space to pass through the first heat exchange space.

10. The ice-making evaporator of claim 9, wherein the guide wall comprises a second main body space-side guide part disposed in the second main body space to guide a refrigerant flowing from one end to the other end of the second main body space to pass through the second heat exchange space.

11. The ice-making evaporator of claim 9, wherein the guide wall comprises first heat exchange space-side guide part extending from the first main body space-side guide part to the first heat exchange space to divide the first heat exchange space into a first passing space and a second passing space.

12. The ice-making evaporator of claim 11,
wherein a flow groove is formed at an end portion in the extension direction of the first heat exchange space-side guide part, at a position adjacent to the ice-making groove, and
wherein the first passing space and the second passing space are formed to be connected in fluid communication between the inner wall of the ice-making member wherein the inner wall defines the heat exchange space, and the flow groove.

13. The ice-making evaporator of any one of claims 1 and 5, further comprising an air pipe connecting an ice-making member-side opening formed on the inner wall of the ice-making groove and a main body-side opening formed on the outer side of the evaporator main body.

14. The ice-making evaporator of any one of claims 1 and 5, wherein the main body space-dividing wall and the heat exchange space-dividing wall are disposed side by side on the same plane.

15. The ice-making evaporator of any one of claims 1 and 5,
wherein a circling space for allowing the refrigerant to flow from the first main body space to the second main body space is provided in the evaporator main body, and
wherein a partition member is disposed between the main body space and the circling space to divide the main body space and the circling space and comprises a first hole connecting the first main body space and the circling space so that the first main body space and the circling space are in fluid communication, and a second hole connecting the second main body space and the circling space so that the second main body space and the circling space are in fluid communication.

16. The ice-making evaporator of any one of claims 1 and 5, wherein the ice-making groove has a semi-spherical shape or polyhedral shape.

17. The ice-making evaporator of any one of claims 1 and 5,
wherein the ice-making member is provided in plural, and
wherein the plurality of ice-making members are arranged along the extension direction of the main body space.

18. The ice-making evaporator of any one of claims 1 and 5, wherein the cross-section perpendicular to the extension direction of the evaporator main body has a semi-spherical shape or a semi-elliptical shape.

19. A method for manufacturing an ice-making evaporator, the method comprising:
providing an evaporator main body having a main body space therein that extends in the front-rear direction and has both ends open;
assembling a main body space-dividing wall to the evaporator main body so that the main body space is divided into a first main body space and a second main body space;
providing an ice-making member having a heat exchange space therein and an ice-making groove on the outer side;
assembling a heat exchange space-dividing wall that divides the heat exchange space into a first heat exchange space and a second heat exchange space to either the evaporator main body or the main body space-dividing wall;
assembling the ice-making member to the evaporator main body; and
closing an open end of the main body space.

20. The method for manufacturing an ice-making evaporator of claim 19, wherein in the dividing the main body space, the main body space-dividing wall is inserted into the evaporator main body through any one of both open ends of the main body space.

21. The method for manufacturing an ice-making evaporator of claim 19,
wherein a coupling hole is provided at a side in the extension direction of the evaporator main body, and
wherein the assembling the heat exchange space-dividing wall comprises:
assembling a coupling member to the main body space-dividing wall through the coupling hole of the evaporator main body; and
assembling the heat exchange space-dividing wall to the coupling member assembled to the main body space-dividing wall through the coupling hole of the evaporator main body.

22. The method for manufacturing an ice-making evaporator of claim 19, further comprising inspecting whether a first inspection target space consisting of the first main body space and the first heat exchange space capable of fluid communication with each other and a second inspection target space consisting of the second main body space and the second heat exchange space capable of fluid communication with each other are fluidly isolated from each other.

23. The method for manufacturing an ice-making evaporator of claim 22,
wherein the inspecting whether it is isolated comprises:
closing any one of both open ends of the evaporator main body;
placing a partition member having a first hole fluidly connected to the first inspection target space and a second hole fluidly connected to the second inspection target space, at any one of both ends of the main body space;
closing the first hole and the second hole;
injecting a predetermined fluid into any one of the first inspection target space and the second inspection target space; and
checking whether the injected fluid leaks into the other one of the first inspection target space and the second inspection target space.
